Europäisches Patentamt

European Patent Office

Office européen des brevets

(19)

(11) Publication number : **0 555 094 A2**

(12) **EUROPEAN PATENT APPLICATION**

(21) Application number : 93300876.5

(22) Date of filing : 05.02.93

(51) Int. Cl.$^5$ : **H04N 9/29**

(30) Priority : **07.02.92 JP 22391/92**
**11.09.92 JP 243050/92**

(43) Date of publication of application :
**11.08.93 Bulletin 93/32**

(84) Designated Contracting States :
**DE GB NL**

(71) Applicant : **MATSUSHITA ELECTRIC**
**INDUSTRIAL CO., LTD.**
**1006, Oaza Kadoma**
**Kadoma-shi, Osaka-fu, 571 (JP)**

(72) Inventor : **Inoue, Ikunori**
**7-1-211 Miyanocho**
**Takatsuki-shi, Osaka (JP)**
Inventor : **Tsujihara, Susumu**
**30-3-1405 Miiminamimachi**
**Neyagawa-shi, Osaka (JP)**
Inventor : **Kida, Kazushige**
**5-17-10, Senrioka**
**Settsu-shi, Osaka (JP)**

(74) Representative : **Rackham, Stephen Neil**
**GILL JENNINGS & EVERY, Broadgate House,**
**7 Eldon Street**
**London EC2M 7LH (GB)**

(54) Beam landing correction apparatus for a cathode ray tube.

(57) By providing a plurality of landing correction coil pairs (1,6 ; 3,5 ; 4,7 ; 2,8) each comprised of a correction coil in the x-axis direction and a correction coil in the y-axis direction at four peripheral corner portions of the cathode ray tube (CRT) and by controlling the direction and magnitude of the resultant vector of the correction magnetic fields generated by the x-axis direction correction coil and the y-axis direction correction coil, the influence of the geomagnetism is cancelled to allow a high-accuracy landing correction of the electron beam to be achieved. Furthermore, by detecting the chromaticity and luminance information on the screen at a particular location thereby to obtain a mislanding quantity and by forming a correction current corresponding to the mislanding quantity through the aforementioned correction means (1,6 ; 3,5 ; 4,7 ; 2,8) an automatic correction is performed to allow a quantitative landing correction to be performed correctly in a short time.

Fig.1(a)

Fig.1(b)

The present invention relates to a landing correction apparatus for preventing a possible degradation of chromatic purity caused by an influence of a geomagnetism in a color television receiver.

Generally in a color television receiver in which a display image is formed on a display screen by scanning phosphor elements through deflection of an electron beam, a landing position of an electron beam is varied by an influence of a geomagnetism to result in a change in luminance and chromaticity of the image picture displayed on the display screen. Particularly in a cathode ray tube for use in a high vision system where high density phosphor elements having a fine pitch is adopted, there occurs a greater degree of a landing error of an electron beam (referred to as "mislanding" hereinafter) due to the influence of the geomagnetism.

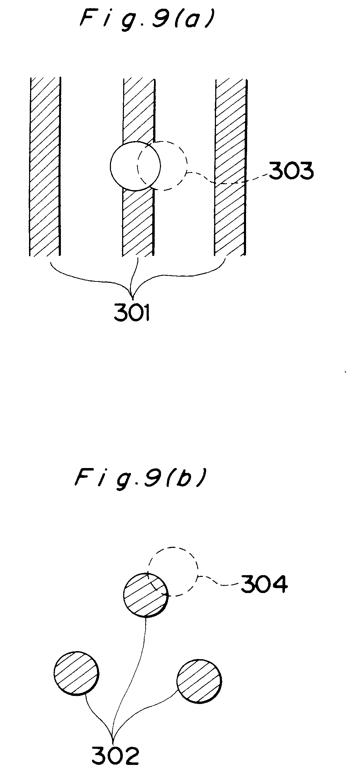

The degree of electron beam mislanding depends on the arrangement of the phosphor elements. With regard to the arrangement of the phosphor elements, for instance, when comparing a stripe type arrangement as shown in Fig. 9 (a) with a dot type arrangement as shown in Fig. 9 (b), the stripe type arrangement has a greater tolerance for the beam landing because no substantial change takes place in luminance efficiency of the phosphor element when the beam landing position varies in the lengthwise direction of the stripe phosphor element. In Figs. 9(a) and 9(b), reference numerals 301 and 302 denote phosphor elements, and reference numerals 303 and 304 depicted by broken lines denote mislanding positions of electron beams.

The mislanding of electron beams is corrected using a landing correction coil through which an appropriate electric current is flowed for canceling the influence of the geomagnetism. As a conventional electron beam landing correction apparatus, there has been employed, for example, a beam landing correction apparatus for a color cathode ray tube as disclosed in the Japanese Patent (Unexamined) Laid-Open Publication No. HEI 2-29187.

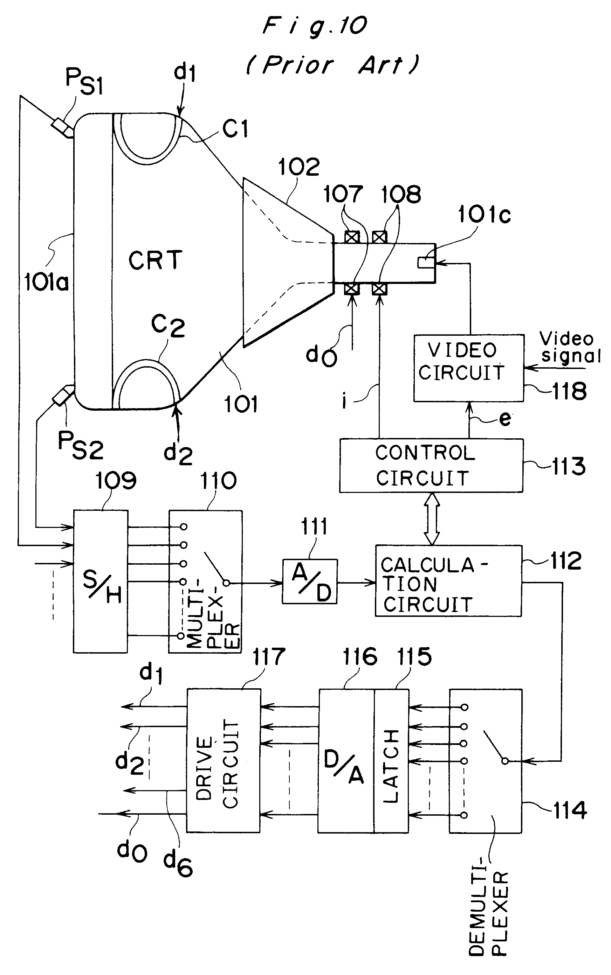

The above mentioned conventional landing correction apparatus is briefly explained with reference to Figs. 10 through 14.

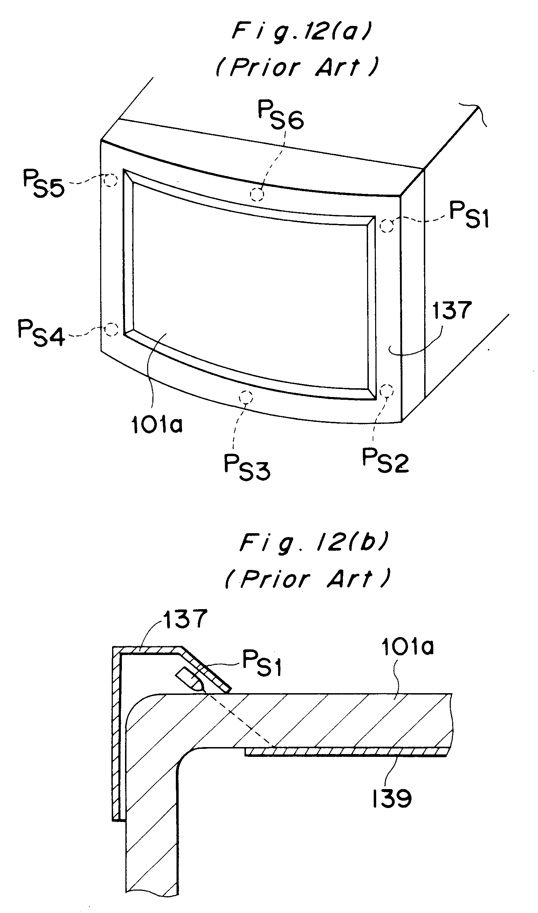

Referring to Figs. 10 and 12, the apparatus comprises a cathode ray tube (CRT) 101 having a display panel 101a, a deflection yoke 102, periphery landing correction coils C1 through C6 for correcting the mislanding of electron beams in peripheral portions of the screen, photosensors Ps1 through Ps6 for detecting the mislanding, a gun center coil 107 for correcting the mislanding of the electron beams at the center portion of the screen, and a measurement coil 108 for generating an auxiliary deflection magnetic field for measuring the mislanding amount. The apparatus further comprises a sample/hold circuit (S/H) 109 for sampling and holding an output of each photosensor, a multiplexer 110, an analog-to-digital (A/D) converter 111, a digital calculation circuit 112, a measurement control circuit 113, a demultiplexer 114, a latch 115, a digital-to-analog (D/A) converter 116, a drive circuit 117 for driving the landing correction coils, and a video circuit 118 for processing a video signal.

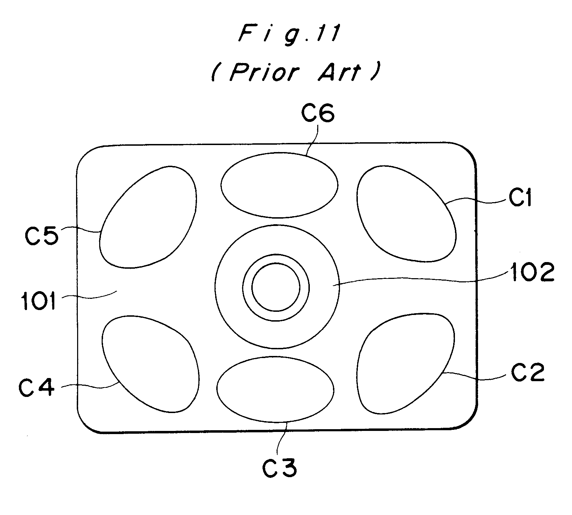

Fig. 11 shows an arrangement of the periphery landing correction coils C1 through C6 for correcting the mislanding of the electron beams at the peripheral portions of the screen.

Figs. 12 (a) and 12 (b) show an arrangement of photosensors Ps1 through Ps6 for detecting the luminance on the screen. In Fig. 12 (a), the positions of the photosensors Ps1 through Ps6 corresponds to the positions of the landing correction coils C1 through C6 at the peripheral portions of the screen. The photosensors are covered by a frame member 137. A phosphor element 139 is provided on the inner surface of the display panel 101a at the face plate of the cathode ray tube 101.

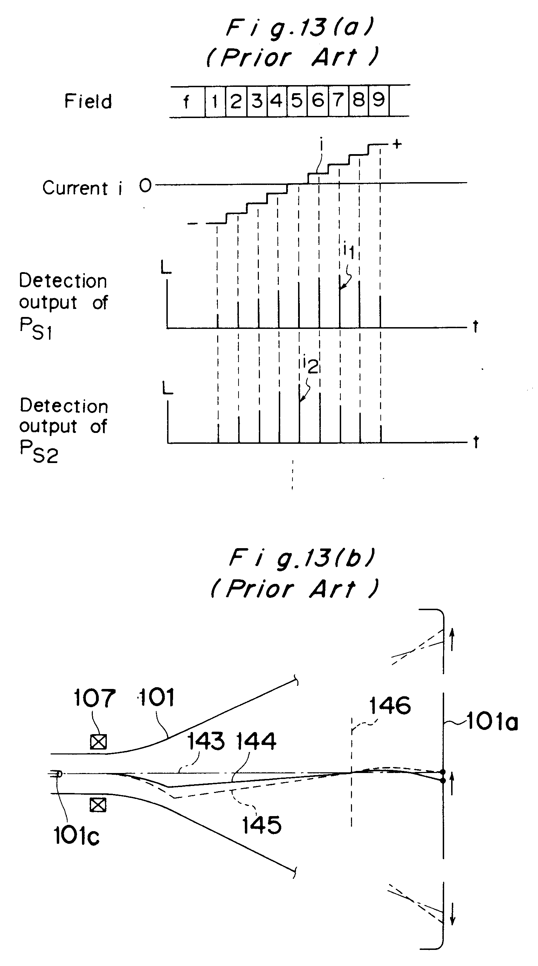

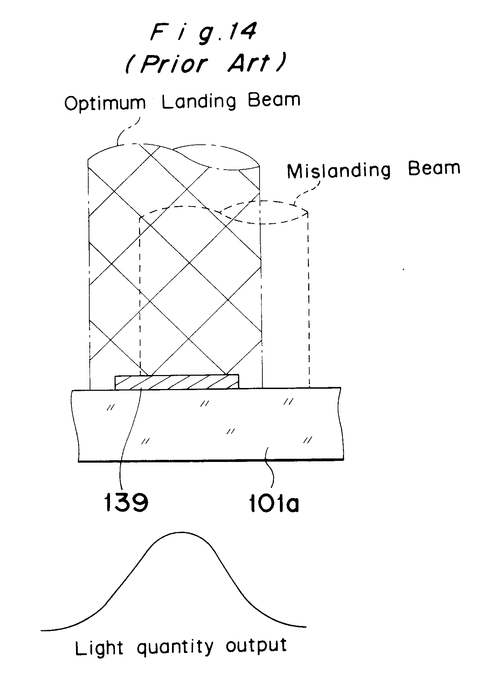

The following describes the operation of the conventional landing correction apparatus having the above-mentioned construction with reference to Figs. 13 and 14. Figs. 13 (a) and 13 (b) are charts for explaining a mislanding detection operation, while Fig. 14 shows a relationship between the beam landing position and the light quantity detected by a photosensor.

First, regarding a measurement current i which is applied to the mislanding amount measurement coil 108 from the measurement control circuit 113, the current i increases in steps from a negative potential region to a positive potential region for measuring the mislanding amount in each field as shown in Fig. 13 (a). In the above case, a control signal e is supplied from the measurement control circuit 113 to the video circuit 118 so that the video circuit 118 provides, for example, a video signal for generating a green or white raster to the cathode 101c of the cathode ray tube 101.

According to change of the current flowing through the measurement coil 108, the deflection center in the deflection yoke position is changed as indicated by the beam loci in Fig. 13 (b). That is, the beam is applied to the position on the screen from a cathode 101c passing through an aperture mask 146 and the beam landing position is moved in the horizontal direction of the screen as indicated by arrows in Fig. 13 (b) (vertical direction in the figure). Reference numeral 143 denotes a center beam when no deflection is applied, and numeral 144 denotes an electron beam deflected by the geomagnetism, and numeral 145 denotes a mislanding-corrected beam deflected by the gun center coil 107.

Light quantity detection outputs of the photosensors Ps1 through Ps6 are sampled every field in the sample/hold circuit 109 as shown in Fig. 13 (a), and the sampled data is transmitted via the multiplexer 110 to the analog-to-digital converter 111 and then supplied to the digital calculation circuit 112 in a form of a digital signal.

The detected light quantity output of the phosphors takes its maximum value at the optimum landing position and gradually decrease as it departs from the optimum landing position as shown in Fig. 14. Since the mislanding amount differs in different portions of the screen, the optimum field number at which the maximum light quantity can be obtained differs in each photosensor.

The digital calculation circuit 112 calculates measurement currents $i_1$, $i_2$, ..., $i_6$ corresponding to the position of each of the photosensors Ps1 through Ps6 at which the maximum output is obtained. Furthermore, an average or a weighted average of the current values are calculated to obtain a correction current $d_0$ to be applied to the gun center coil 107. The correction current $d_0$ is a direct current which is used for the landing correction in a center area of the screen.

Meanwhile, correction currents $d_1$, $d_2$, ..., $d_6$ are calculated from the measurement currents $i_1$, $i_2$, ..., $i_6$. The correction currents $d_1$, $d_2$, ..., $d_6$ calculated in the calculation circuit 112 are each output via the demultiplexer 114 to the latch circuit 115 and further converted into an analog form by means of the digital-to-analog (D/A) converter 116 to be subsequently supplied via the drive circuit 117 to each of the periphery landing correction coils C1 through C6. The above-mentioned correction currents $d_1$, $d_2$, ..., $d_6$ are direct currents to be supplied to the correction coils at the peripheral portions of the cathode ray tube to correct the beam mislanding which cannot be removed by the gun center coil 107.

However, in the above-mentioned landing correction coil arrangement as in the conventional example, although the strength of the magnetic field formed by the correction coils can be controlled, the direction of the landing correction magnetic field formed by the correction coils cannot be controlled, and therefore the influence of the geomagnetism directed in a variety of directions cannot be cancelled, resulting in involving a problem that the beam mislanding cannot be corrected with high accuracy.

Furthermore, the optimum landing position is specified to the point at which the light quantity detected by the photosensor is at its maximum value without taking any matter of chromaticity into consideration, and therefore there also arises another problem that no sufficient uniformity in chromaticity can be achieved in the displayed picture even when a landing correction is effected.

According to a first aspect of this invention a beam landing correction apparatus for correcting a beam mislanding due to a geomagnetism in a cathode ray tube comprises:

landing correction means including at least a plurality of coil pairs each of which is comprised of two correction coils of which magnetic field axes cross each other at right angles, the correction coil pairs arranged on the peripheral portions of the cathode ray tube;

drive means for supplying a landing correction signal to said landing correction means for correcting the beam mislanding; and

control means for controlling said drive means.

The present invention provides a beam landing correction apparatus which is capable of correcting with high accuracy the influence of the geomagnetism which extends irregularly in a cathode ray tube and which has a higher intensity in the peripheral portions of the cathode ray tube.

According to a second aspect of the present invention, a beam landing correction apparatus for correcting a beam mislanding due to a geomagnetism in a color television receiver for receiving video information comprises:

display means for displaying the received video information on a display screen in the color television receiver;

landing correction means for correcting the beam mislanding;

drive means for supplying a landing correction signal to said landing correction means;

landing error detection means for detecting beam mislanding quantity based on a luminance and chromaticity distribution in a two-dimensional area on the display screen of said display means;

control means for controlling said drive means according to the detected error data output from said landing error detection means.

The present invention provides a beam landing correction apparatus capable of effecting a quantitative landing correction with high accuracy in a short time by detecting chromaticity data and luminance data on the screen to obtain a beam mislanding amount and to generate a correction current corresponding to the mislanding amount to achieve an automatic correction operation.

According to a third aspect of the present invention, a beam landing correction apparatus for correcting a beam mislanding due to a geomagnetism in a cathode ray tube comprises:

landing correction means including at least a plurality of landing correction coil pairs each of which is comprised of two correction coils of which correction magnetic field axes cross each other at right angles;

drive means for driving said landing correction means;

correction magnetic field direction setting means for setting a magnetic field direction for the correction magnetic field to be generated by said landing correction means;

correction magnetic field intensity adjustment means for varying the intensity of the correction magnetic field without exerting any substantial influence on the correction magnetic field direction; and

control means for controlling said correction magnetic field direction setting means and said correction magnetic field intensity adjustment means.

The present invention provides a beam landing correction apparatus capable of uniformizing the chromaticity and luminance on the screen by detecting the chromaticity data as well as luminance data of a display image of a video signal on the display screen, obtaining a mislanding amount according to the detected chromaticity and luminance data, and supplying a correction current corresponding to the mislanding amount to the afore-mentioned landing correction coils to effect an automatic landing correction.

According to a fourth aspect of the present invention, a beam landing correction apparatus for correcting a beam mislanding due to a geomagnetism in a color television receiver for receiving video information comprises:

display means for displaying the received video information on a display screen in the color television receiver;

landing correction means for correcting the beam mislanding;

correction area designation means for designating an area to be subject to landing correction;

test signal generating means for displaying a test signal on the display screen of said display means according to an output of said correction area designation means;

mislanding error detection means for detecting a mislanding error in the correction area designated by said correction area designation means;

correction magnetic field data generating means for generating correction magnetic field data corresponding to the correction area designated by said correction area designation means according to a mislanding error data output from said mislanding error detection means;

memory means for storing the correction magnetic field data generated by said correction magnetic field data generating means; and

drive means for driving said landing correction means according to the correction magnetic field data output from said memory means.

Particular embodiments of the present invention will now be described with reference to the accompanying drawings, in which:-

Fig. 1 (a) is a block diagram of a beam landing correction apparatus in accordance with a first embodiment of the present invention;

Fig. 1 (b) is a schematic view showing an arrangement of landing correction coils of the first embodiment;

Figs. 2 (a), 2 (b), and 2 (c) are explanatory views of the operation of the first embodiment;

Fig. 3 (a) is a block diagram of a modified example of the first embodiment;

Fig. 3 (b) is a schematic view showing an arrangement of landing correction coils of Fig. 3 (a);

Fig. 4 (a) is a block diagram of a beam landing correction apparatus in accordance with a second embodiment of the present invention;

Fig. 4 (b) is a schematic view showing an arrangement of landing correction coils of the second embodiment;

Fig. 5 is a block diagram of a beam landing correction apparatus in accordance with a third embodiment of the present invention;

Fig. 6 is a schematic view showing an arrangement of landing correction coils of the third embodiment;

Fig. 7 is an explanatory view of the operation of the third embodiment;

Fig. 8 (a) is a block diagram of a beam landing correction apparatus in accordance with a fourth embodiment of the present invention;

Fig. 8 (b) is a schematic view showing an arrangement of landing correction coils of the fourth embodiment;

Figs. 9 (a) and 9 (b) are explanatory views of tolerances in beam landing in different arrangements of phosphor elements;

Fig. 10 is a block diagram of a conventional beam landing correction apparatus;

Fig. 11 is a schematic view showing an arrangement of landing correction coils of the conventional apparatus;

Figs. 12 (a) and 12 (b) are schematic views showing an arrangement of photosensors in the conventional apparatus;

Fig. 13 (a) and 13 (b) are explanatory views of the operation of the conventional apparatus; and

Fig. 14 is an explanatory view showing a relationship between the light quantity and the beam landing positions in the conventional apparatus.

Embodiment 1

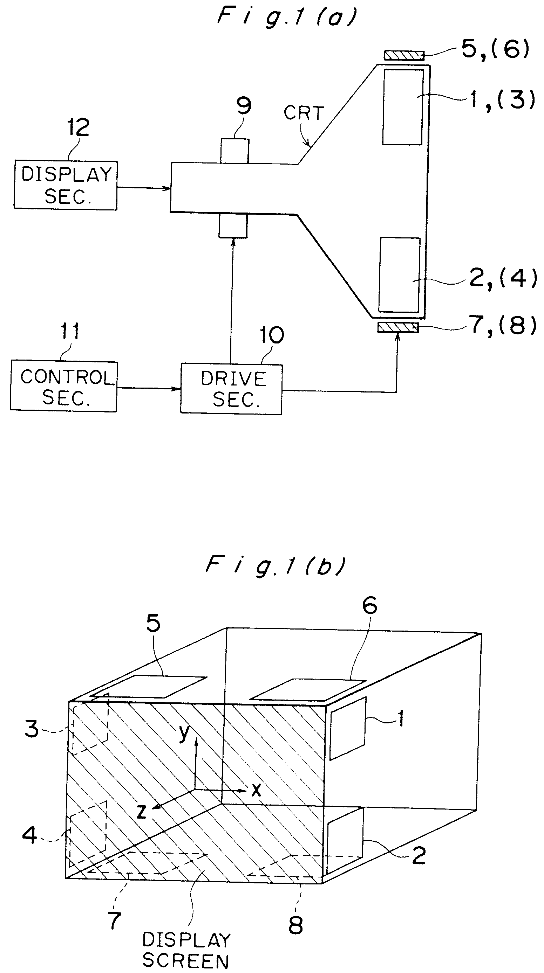

The following describes a first embodiment of a beam landing correction apparatus according to the present invention with reference to Figs. 1 through 3.

Referring to Figs. 1(a) and 1(b), the beam landing correction apparatus of the first embodiment comprises a plurality of landing correction coils arranged on peripheral portions of a cathode ray tube (CRT), where the landing correction coils consist of x-axis direction correction coils 1 through 4 for correcting mislanding in the x-axis direction and y-axis direction correction coils 5 through 8 for correcting mislanding in the y-axis direction.

The landing correction coils 1 through 8 are arranged by pairing each of the x-axis direction correction coils 1 through 4 with each of the y-axis direction correction coils 5 through 8 at four peripheral corner portions of the cathode ray tube because large mislanding of electron beams is caused due to a concentration of the geomagnetism at the peripheral portions of the cathode ray tube by an influence of a frame member and the like supporting the cathode ray tube. The x-axis direction correction coils and the y-axis direction correction coils are arranged at peripheral portions of the cathode ray tube in such a manner that the magnetic fields generated by the x-axis direction correction coils and the magnetic fields generated by the y-axis direction correction coils cross each other at right angles.

The apparatus further comprises a static landing correction coil 9 for correcting static mislanding of electron beams, which is arranged at a neck portion of the cathode ray tube.

The apparatus is further comprised of a drive section 10 for supplying an electric correction signal to each of the landing correction coils 1 through 9, a control section 11 for controlling the drive section 10 to generate an appropriate correction signal to be supplied to the drive section 10 so as to cancel the influence of the geomagnetism, and a display section 12 for supplying a video signal to the cathode ray tube to display an image of the video signal on a screen of the cathode ray tube.

The following describes the operation of the beam landing correction apparatus of the first embodiment having the construction mentioned above.

In the first embodiment, by arranging a plurality of landing correction coil pairs provided by pairing each of the x-axis direction correction coils 1 through 4 with each of the y-axis direction correction coils 5 through 8 at four peripheral corner portions of the cathode ray tube, the mislanding of beams can be corrected with high accuracy using the resultant correction magnetic field combination of the x-axis component and y-axis component of the correction magnetic field. For example, a pair of the x-axis direction correction coil 1 and the y-axis direction correction coil 6 serve as a landing correction coil pair for correcting the beam mislanding in the upper right portion of the screen of the cathode ray tube in the figure.

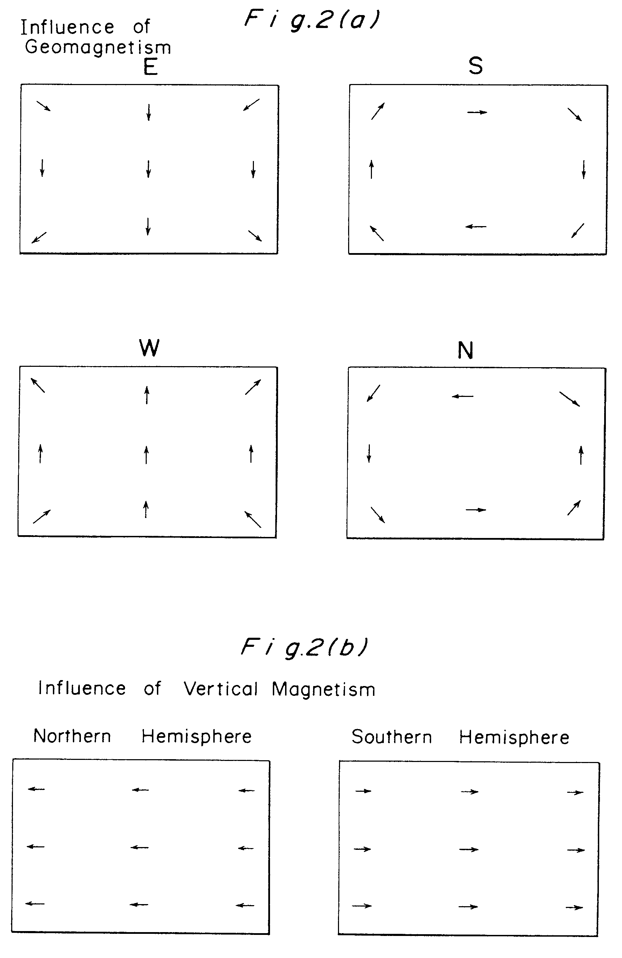

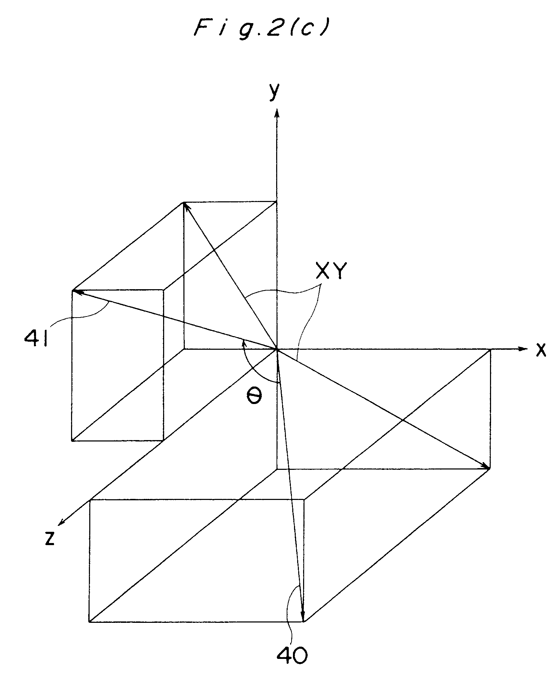

The following describes in detail the above-mentioned operation with reference to Figs. 2 (a) through 2 (c).

Figs. 2 (a) and 2 (b) show the influence of the geomagnetism exerted on the electron beam movement. Figs. 2 (a) shows the influence of the geomagnetic field in different geographical directions East, West, South and North and Figs. 2 (b) shows the influence of the vertical magnetic fields exerted on the movement of an electron beam, where the electron beam on the screen receives different influence depending on the geographical direction and the northern or southern hemispheric condition.

Particularly, in a cathode ray tube (CRT) having a fine shadow mask pitch, the influence of the geomagnetism exerted on the beam movement is an important factor in terms of color purity. Therefore, a uniform image can be displayed by performing landing corrections particularly at peripheral portions with landing correction coils arranged at the peripheral four corner portions of the screen to completely effect cancellation of the influence of the geomagnetism. It is noted here that the cancellation of the influence of the geomagnetism can be achieved by controlling the polarity and the quantity of a direct current potential to be supplied to the landing correction coils in each direction.

Referring to Fig. 2 (c), reference numeral 40 denotes a geomagnetism vector causing a beam mislanding, while reference numeral 41 denotes an electron beam vector. The beam mislanding occurs for the reason that the Lorentz's force is exerted on the electron beam to displace the landing position of the electron beam in the cathode ray tube. In order to remove the mislanding of the electron beam, there are two methods, one for removing the geomagnetic vector to be zero, and the other for making the geomagnetic vector 40 coincide with the electron beam vector 41. The following describes the latter method in more detail.

Assuming now that the geomagnetic vector 40 and the electron beam vector 41 meet at an angle $\theta$, the magnitude of the Lorentz's force causing the beam mislanding depends on the value of sin $\theta$. In other words, the Lorentz's force can be made zero when the geomagnetic direction and the electron beam direction coincide with each other. By this way, the occurrence of the mislanding due to the geomagnetism can be prevented.

In order to effect the former one of the above-mentioned two mislanding cancellation methods, there must be employed three-dimensional correction coil means for correcting the beam mislanding in the x-, y-, and z-axes directions. However, it is difficult to provide the z-direction correction coil without preventing the electron beam projection to the screen regarding the construction of the color television receiver, and therefore the latter method is more practical.

For the above reasons, it is necessary to provide landing correction coil pairs capable of generating magnetic fields in the x-axis and y-axis directions in order to achieve a high-accuracy correction with cancellation of the influence of the geomagnetism, and therefore it is required to vary the component force in the x-y plane of the geomagnetic vector by means of the resultant combined vector of correction component forces in the x-axis and y-axis directions to make the geomagnetic direction coincide with the electron beam direction.

Taking the aforementioned factors of the beam mislanding due to the geomagnetism into account, it is impossible to make the geomagnetic direction coincide with the electron beam direction even by fixing the magnetic field direction generated by the landing correction coil and varying the magnitude of the magnetic field as exemplified in Fig. 1 (b). In other words, a high-accuracy correction can be achieved by varying the magnitude and direction of the correction magnetic field vector generated by the x-axis direction correction coil and the y-axis direction correction coil to vary the geomagnetic direction thereby making the geomagnetic direction coincide with the electron beam direction.

Further by providing the peripheral landing correction coils 1 through 8 as in the present embodiment, it becomes possible to reduce a correlation on the display screen of a color television, i.e., it is possible to prevent a phenomenon that a correction effected at a portion increases a mislanding amount at another portion. In the present embodiment, further the static correction coil 9 is provided at the neck portion of the cathode ray tube to permit a static correction of the beam mislanding.

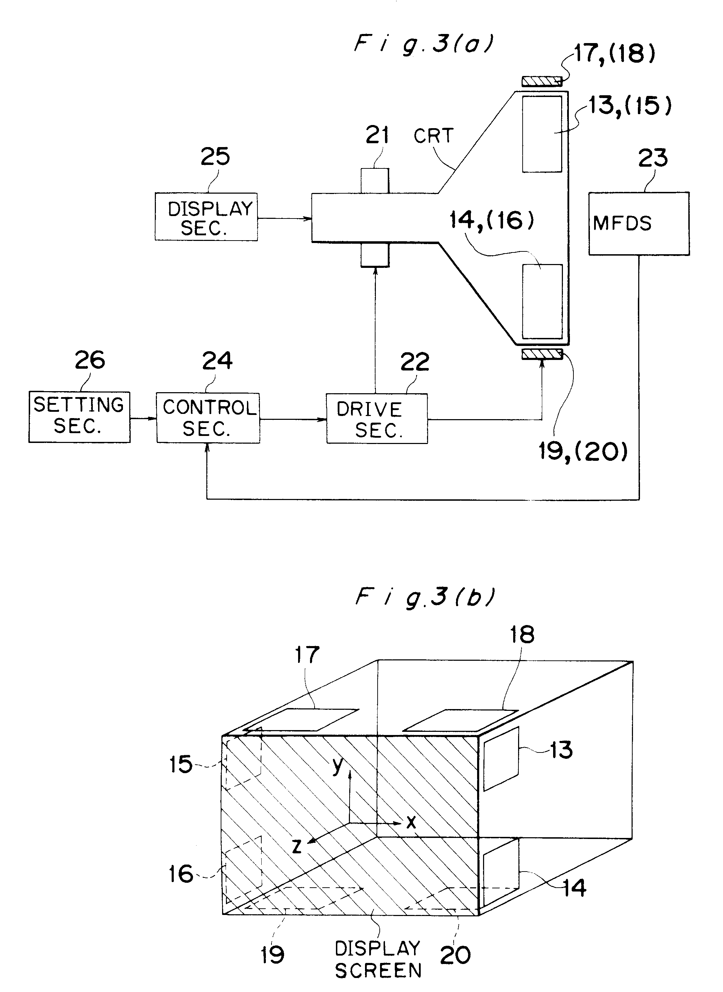

Figs. 3 (a) and 3 (b) show a modified example of the landing correction apparatus having the same construction as that of the first embodiment except employing a magnetic field detecting section (MFDS) and a geomagnetism direction setting section. Referring to Figs. 3 (a) and 3 (b), the beam landing correction apparatus comprises partial landing correction coils 13 through 20, a static correction coil 21, a drive section 22 for supplying a correction current signal to the above-mentioned correction coils, in the same manner as that of the first embodiment. The apparatus further comprises a magnetic field detection section (MFDS) 23 for externally detecting the intensity and direction of the geomagnetism at various portions of the display screen, a control section 24 for controlling the drive section 22 by generating a control signal in response to receiving the geomagnetic field intensity and direction output from the magnetic field detection section 23, a display section 25 for displaying an image on the screen of the cathode ray tube, and a setting section 26 for manually setting the direction of the geomagnetism, thereby to achieve an automatic landing correction.

The following describes the operation of the landing correction apparatus having the construction mentioned above. The automatic landing correction of the landing correction apparatus is realized by providing the magnetic field detection section 23 for detecting the intensity and direction of the geomagnetism. The output of the magnetic field detection section (MFDS) 23 is transmitted to the control section 24 which generates a control signal according to the received detection values of the intensity and direction of the geomagnetism thereby to control the drive section 22 for supplying a correction current signal to each of the correction coils 13 through 20 and 21. It is noted that correction data corresponding to the intensity and direction of the geomagnetism are already stored in the control section 24 as described in the first embodiment. It is also possible to manually set the direction of the geomagnetism by providing the setting section 26.

Although the partial landing correction coils 1 through 8 and 13 through 20 have rectangular shapes in the present embodiment, it is of course effective that they have other shapes.

Embodiment 2

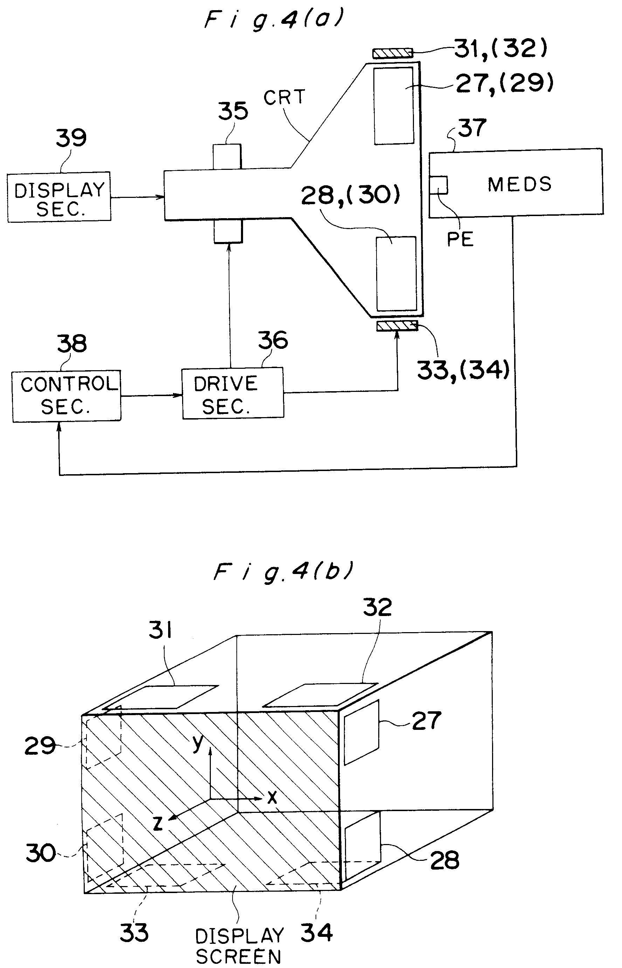

Fig. 4 (a) shows a beam landing correction apparatus in accordance with a second embodiment of the present invention, while Fig. 4 (b) shows an arrangement of the partial landing correction coils, which has a similar construction to that of the first embodiment except employing a mislanding error detection section (MEDS). Referring to Figs. 4 (a) and 4 (b), the present apparatus comprises peripheral landing correction coils 27 through 34, a static correction coil 35, a drive section 36 for supplying a correction current to the above-mentioned correction coils in the same manner as that of the first embodiment. The apparatus further comprises a mislanding error detection section (MEDS) 37 for detecting the luminance and chromaticity on the screen of the color television display to detect a mislanding of an electron beam, a control section 38 for generating a control signal according to an output from the mislanding error detection section (MEDS) 37 to control the drive section 36, and a display section 39 for displaying an image on the screen of the cathode ray tube.

The following describes the operation of the landing correction apparatus of the second embodiment having the construction mentioned above. By arranging the mislanding error detection section (MEDS) 37 at a portion to be subjected to a landing correction, the luminance and chromaticity data at the portion to be corrected is taken in by means of a photoelectric transfer element PE to detect the beam mislanding according to the luminance and chromaticity data obtained. The mislanding error detected by the detection section (MEDS) 37 is transmitted to the control section 38, which generates a control signal according to the mislanding error data output from the detection section (MEDS) 37 to control the drive section 36 thereby to effect an automatical landing correction.

As described above, according to the present embodiment, it becomes possible to automatically perform a landing correction with high accuracy and quantitative correction to be effected in a short time.

The following describes the operation of the control section 38 in detail. Although the amount of the mislanding error is evaluated based on the luminance and chromaticity data in the present embodiment, it is necessary to determine a convergence condition which is the decisive factor in the automatical landing correction.

Therefore, the mislanding error is obtained according to the equations as follows.

$$Y = Y_1/Y_0 \qquad r = \sqrt{(x-x_0)^2 + (y-y_0)^2}$$

where Y and r represent respectively an error in luminance and an error in chromaticity with respect to reference values, $Y_1$ represents the luminance at the correction point, x and y represent the chromaticity values at the correction point, $Y_0$ represents the reference value in luminance, and $x_0$ and $y_0$ represent the reference values in chromaticity.

By obtaining the mislanding error at the correction point according to the above equations, the control section 38 generates the control signal to control the drive section 36 which generates an electric correction current to be flowed through each of the landing correction coils 27 through 34 and 35 such that the mislanding evaluation amount at the correction point comes closer to the reference value. In the present case, the convergence condition is determined while attaching great importance to the chromaticity, i.e., the value r in the above equation. This is because the chromaticity does not always come closest to the reference value at the point where the maximum luminance is achieved, and making much of the uniformity on the display screen in a color television receiver, the convergence condition should be determined putting more weight on the chromaticity.

A concrete convergence condition is determined as follows. That is, the point at which the error in chromaticity r is in a specified permissive range and the maximum luminance is achieved in the same range is determined to be the convergence point. In the above case, according to the result of a visual image quality evaluation experiment, it is appropriate that the value r, i.e., a distance from the reference value is within 0.01 on the chromaticity diagram in determining the above-mentioned permissive range.

In a manner as described above, the mislanding correction is performed by obtaining the mislanding error on the display screen of the color television receiver to be corrected by the control section 38 and by applying an electric correction signal corresponding to the detected mislanding error flowing through the correction coils 27 through 34 and 35 to determine the optimum convergence point. The procedure of the landing correction is that, a static landing correction at the center of the screen of the color television receiver is firstly effected, and thereafter a partial landing correction is effected at the peripheral portions of the screen.

Although the correction is effected with more weight put on the chromaticity between the luminance and chromaticity in the two-dimensional area of an image in the second embodiment, the correction may be effected putting more weight on the luminance at need.

Embodiment 3

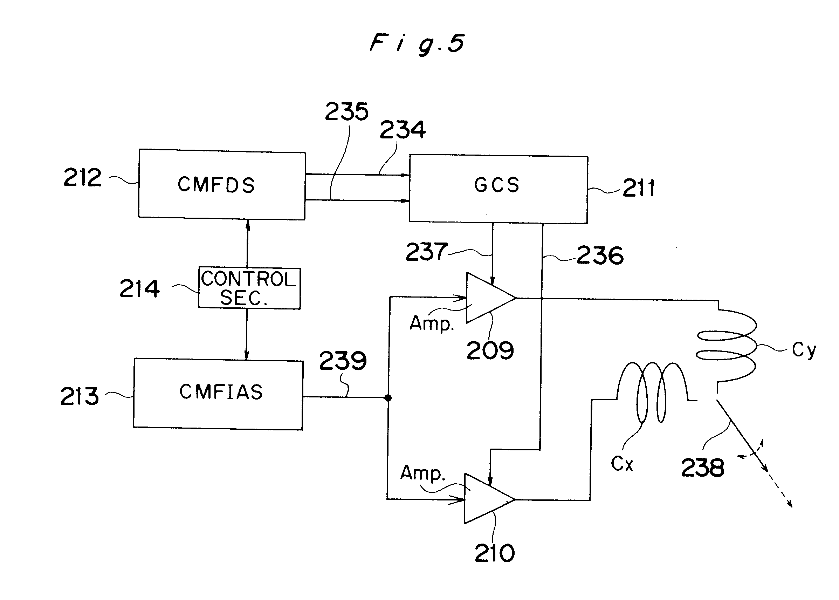

Figs. 5 through 7 shows a beam landing correction apparatus in accordance with a third embodiment of the present invention.

In Fig. 5, the apparatus comprises an x-axis direction correction coil Cx for correcting a mislanding in a horizontal direction on the screen of the cathode ray tube and a y-axis direction correction coil Cy for correcting a mislanding in a vertical direction on the screen of the cathode ray tube. The apparatus also comprises amplifier sections 209 and 210 for supplying a correction current to the coils, and a gain control section (GCS) 211 for adjusting the gain of the amplifier sections 209 and 210, which constitutes landing correction means and drive means therefor. The apparatus further comprises a correction magnetic field direction setting section (CMFDS) 212 for setting the magnetic field direction of the landing correction which is effected by the resultant combined vector formed by the two coils of the x-axis direction correction coil Cx and the y-axis direction correction coil Cy, a correction magnetic field intensity adjustment section (CMFIAS) 213 for adjusting the landing correction magnetic field intensity, and a control section 214 for controlling the correction magnetic field direction setting section (CMFDS) 212 and the correction magnetic field intensity adjustment section (CMFIAS) 213.

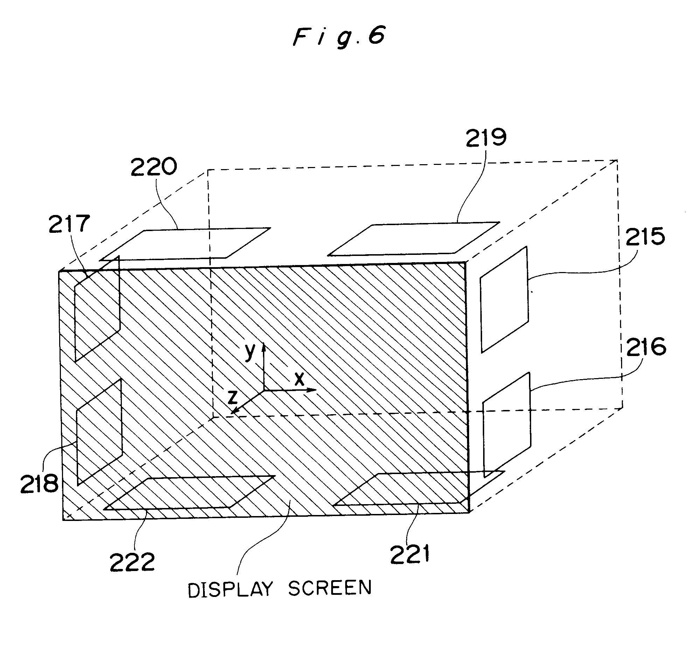

Referring to Fig. 6, the x-axis direction correction coil Cx consisting of landing correction coils 215 through 218 and the y-axis direction correction coil Cy consisting of landing correction coils 219 through 222 are arranged at peripheral portions of the cathode ray tube in such a manner that the magnetic fields generated by x-axis direction correction coils 215 through 218 and the magnetic fields generated by y-axis direction correction coils 219 through 222 cross each other at right angles in the same manner as in the first and second embodiments.

The following describes the operation of the landing correction apparatus of the third embodiment having a construction as mentioned above.

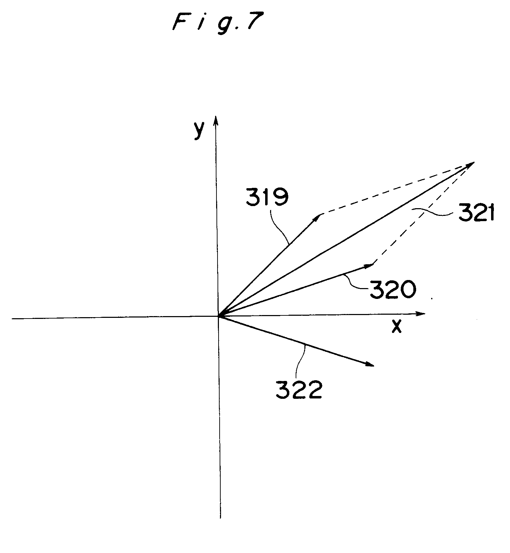

Referring to Fig. 7, it is assumed that, reference numeral 319 denotes an x-y plane component of the geomagnetism, reference numeral 320 denotes a correction magnetic field vector generated by the landing correction coils, reference numeral 321 denotes the resultant combined vector of the correction magnetic field generated by the landing correction coil and the geomagnetism, and reference numeral 322 denotes a target value of the vector to which the magnetic field direction and magnetic field intensity shall be adjusted. When the resultant combined vector 321 of the correction magnetic field 320 and the geomagnetic vector 319 coincide with the target value 322 of the vector, the resultant combined vector of the z-axis direction component (component in the direction toward the screen) of the geomagnetism and the target value 322 coincides with the electron beam direction to allow the influence of the mislanding due to the geomagnetism to be canceled.

The control procedure of the operation is as follows. First, the correction magnetic field direction setting section (CMFDS) 212 generates correction magnetic field direction setting data 234 and 235, so that the gain control section (GCS) 211 adjusts the gain of the amplifier sections 209 and 210 by supplying gain control data 236 and 237 to the amplifier sections 210 and 209 so that the data 236 and 237 are used for the gain control of the amplifier sections 209 and 210. Then the correction magnetic field intensity adjustment section (CMFIAS) 213 generates correction magnetic field intensity adjustment data 239 which is supplied to the amplifier sections 209 and 210, and the ratio of the correction current flowing through the x-axis direction correction coil Cx to the correction current flowing through the y-axis direction correction coil Cy is made constant, thereby allowing the intensity of the correction magnetic field generated by the landing correction coil to be varied while fixing the landing correction magnetic field direction.

In other words, by varying the correction magnetic field intensity with the correction magnetic field direction fixed, it becomes possible to determine whether or not the correction magnetic field intensity can be adjusted to the target vector value 322 in the correction magnetic field direction. Therefore, the magnetic field direction setting and magnetic field intensity setting operations are effected by means of the control section 214 to successively vary the direction and intensity of the landing correction magnetic field and the instantaneous landing condition on the display screen is evaluated in the color television receiver, so that an optimum correction magnetic field can be determined in algorism.

As described above, the landing correction coil pairs of the x-axis direction correction coil Cx and the y-axis direction correction coil Cy are arranged serving as landing correction means at the peripheral portions of the cathode ray tube as shown in Fig. 6 and the currents flowing through the landing correction coils are controlled in the manner mentioned above, a simple and digitally-controlled landing adjustment can be achieved with high accuracy.

Although the correction direction (resultant combined vector) and the correction intensity can be controlled arbitrarily in the third embodiment, either one may be only controlled at need.

Embodiment 4

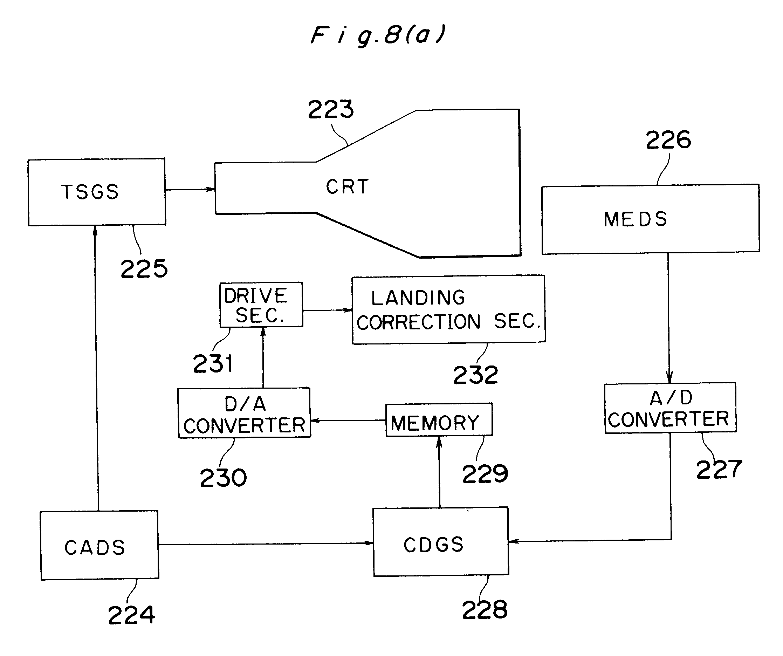

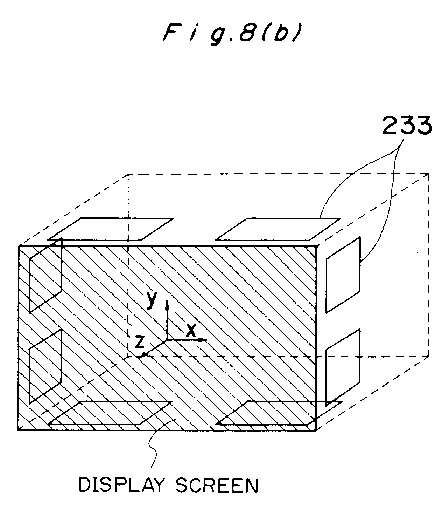

The following describes a beam landing correction apparatus in accordance with a fourth embodiment of the present invention with reference to Figs. 8 (a) and 8 (b).

Referring to Fig. 8 (a), the present apparatus comprises a cathode ray tube (CRT) 223 for displaying a received video image on the screen of the color television receiver, a correction area designation section (CADS) 224 for designating an area to be subject to landing correction, and a test signal generating section (TSGS) 225 for generating a test signal to be displayed on the screen corresponding to the correction area data designated by the correction area designation section (CADS) 224. The apparatus further comprises a mislanding error detection section (MEDS) 226 for detecting a mislanding error based on the test signal displayed on the television receiver screen, an analog-to-digital converter section 227 for converting the analog mislanding error data into digital data, and a correction data generating section (CDGS) 228 for generating correction magnetic field data corresponding to the correction area designated by the correction area designation section (CADS) 224 depending on the A/D converted mislanding error data. The correction magnetic field data generated by the correction data generating section (CDGS) 228 is stored in a memory section 229 corresponding to the designated correction area. The correction magnetic field data is converted into an analog value through a digital-to-analog converter section 230, and a drive section 231 receives the analog correction magnetic field data to drive a landing correction section 232 based on the correction magnetic field data. The landing correction section 232 comprises four pairs of landing correction coils for x-axis direction correction and y-axis direction correction. The arrangement of the x-axis and y-axis direction correction coil pairs is shown in Fig. 8 (b) in the same manner as in the preceding embodiments 1 to 3.

Referring to Fig. 8 (b), reference numeral 233 denotes a landing correction coil pair comprised of two coils of the x-axis direction correction coil and y-axis direction correction coil, and the landing correction coil pairs are arranged at the four corners of the peripheral portions of the cathode ray tube in the same manner as in the preceding embodiments.

The following describes the operation of the landing correction apparatus of the fourth embodiment constructed as mentioned above.

The direction and intensity of the correction magnetic field can be independently controlled by means of the landing correction coil pair 233 as described in the third embodiment. The procedure of performing a landing adjustment operation on the display screen of the cathode ray tube 223 is as following:

Firstly, an area to be subjected to a landing correction is designated by the correction area designation section (CADS) 224. According to the correction area data designated by the correction area designation section (CADS) 224, the test signal generating section (TSGS) 225 displays a test signal for landing correction in the area to be corrected on the screen of the cathode ray tube 223. With the test signal displayed on the screen, the mislanding error detection section (MEDS) 226 detects the mislanding error in the area to be corrected.

The error data detected by the mislanding error detection section (MEDS) 226 is converted into digital data through the analog-to-digital converter section 227 to be supplied to the correction data generating section (CDGS) 228. The correction data generating section (CDGS) 228 generates magnetic field intensity data and magnetic field direction data optimum for the correction based on the supplied error data. The memory section 229 stores the optimum correction data of the magnetic field intensity and direction data which is supplied on occasion to the drive section 231 via the digital-to-analog converter section 230. Then the drive section 231 drives the landing correction section 232 according to the optimum correction data.

By constructing the landing correction apparatus in the manner as described above in the fourth embodiment of the present invention, a high-accuracy automatic landing correction can be performed.

Although a digital processing correction system is adopted in the fourth embodiment, the same effect can be achieved by means of an analog processing circuit.

Although the landing correction coils are arranged at peripheral portions of the cathode ray tube in the embodiments 1 to 4, it is of course effective that they are arranged in other positions.

As described above, according to the first aspect of the present invention, a correction coil pair comprised of the x-axis direction correction coil and the y-axis direction correction coil is provided at each of four peripheral corner portions of the cathode ray tube, and by virtue of the resultant combined vector of the magnetic fields of the x-axis and y-axis direction correction coils, it becomes possible to correct with high accuracy the mislanding attributed to the concentration of the geomagnetism at the peripheral portions of the cathode ray tube due to the influence of the frame and the like.

Furthermore, by adopting an arrangement where the magnetic field detection means (23) is provided for detecting the direction and magnetic field intensity of the geomagnetism at a specified position of the color television receiver, the control means controls the drive means to generate a landing correction signal according to the output from the magnetic field detection means, so that the automatical landing correction can be achieved by detecting the magnetic field intensity and direction of the geomagnetism and generating the correction signal corresponding to the detected intensity and direction data of the geomagnetic field.

According to the second aspect of the present invention, the luminance and chromaticity on the screen of the color television display is detected by the mislanding error detection section to obtain the mislanding error, so that a quantitative landing correction can be achieved in a short time with high accuracy by driving the correction coils using a correction signal corresponding to the mislanding error data.

According to the third aspect of the present invention, by successively controlling at control terminals the magnetic field direction and magnetic field intensity of the correction magnetic field formed by each correction coil, a high-accuracy landing correction can be achieved by means of an algorithmic control to thereby allow a simple and high-accuracy landing adjustment to be achieved by means of a digital control.

According to the fourth aspect of the present invention, the mislanding error detection section detects the mislanding error on the display screen of a color television receiver to supply an optimum correction data of the direction and intensity of the correction magnetic field to the landing correction coil pair comprised of the x-axis direction correction coil and the y-axis direction correction coil according to the mislanding error quantity, a high-accuracy automatic landing correction can be achieved providing a great practical effect. Any system of the present invention is very effective particularly when it is applied to a shadow mask type CRT for the high-vision system.

## Claims

1. A beam landing correction apparatus for correcting a beam mislanding due to a geomagnetism in a cathode ray tube comprising:

    landing correction means including at least a plurality of coil pairs (1 through 8) each of which is comprised of two correction coils of which magnetic field axes cross each other at right angles, the correction coil pairs arranged on the peripheral portions of the cathode ray tube;

    drive means (10) for supplying a landing correction signal to said landing correction means for correcting the beam mislanding; and

    control means (11) for controlling said drive means.

2. The beam landing correction apparatus as claimed in Claim 1, wherein said landing correction means further comprises a static correction coil (9) arranged at a neck portion of the cathode ray tube.

3. The beam landing correction apparatus as claimed in Claim 1, wherein said landing correction means comprises magnetic field detection means (23) for detecting the direction and intensity of the geomagnetic field at a specified position of the cathode ray tube and said control means controls said drive means to generate a landing correction signal according to the output data of the direction and intensity of the geomagnetic field generated from said magnetic field detection means.

4. A beam landing correction apparatus for correcting a beam mislanding due to a geomagnetism in a color television receiver for receiving video information comprising:

display means (39, CRT) for displaying the received video information on a display screen in the color television receiver;

landing correction means (27 through 34, 35) for correcting the beam mislanding;

drive means (36) for supplying a landing correction signal to said landing correction means;

landing error detection means (37) for detecting beam mislanding quantity based on a luminance and chromaticity distribution in a two-dimensional area on the display screen of said display means;

control means (38) for controlling said drive means according to the detected error data output from said landing error detection means.

5. The beam landing correction apparatus as claimed in Claim 4, wherein said landing error detection means includes a photoelectric transfer element for detecting the luminance and chromaticity distribution on the display screen to be transferred to an electrical output data of the mislanding quantity.

6. The beam landing correction apparatus as claimed in Claim 4, wherein said landing error detection means obtains the landing error attributed to the beam mislanding based on the luminance and chromaticity data with respect to specified reference values of the luminance and chromaticity and the obtained landing error data is supplied to said control means.

7. A beam landing correction apparatus for correcting a beam mislanding due to a geomagnetism in a cathode ray tube comprising:

landing correction means (Cx, Cy) including at least a plurality of landing correction coil pairs (215/219 through 218/222) each of which is comprised of two correction coils of which correction magnetic field axes cross each other at right angles;

drive means (209, 210, 211) for driving said landing correction means;

correction magnetic field direction setting means (212) for setting a magnetic field direction for the correction magnetic field to be generated by said landing correction means;

correction magnetic field intensity adjustment means (213) for varying the intensity of the correction magnetic field without exerting any substantial influence on the correction magnetic field direction; and

control means (214) for controlling said correction magnetic field direction setting means and said correction magnetic field intensity adjustment means.

8. The beam landing correction apparatus as claimed in Claim 7, wherein said control means controls said correction magnetic field direction setting means and said correction magnetic field intensity adjustment means in a sequential manner.

9. A beam landing correction apparatus for correcting a beam mislanding due to a geomagnetism in a color television receiver for receiving video information comprising:

display means (223 CRT) for displaying the received video information on a display screen in the color television receiver;

landing correction means (232) for correcting the beam mislanding;

correction area designation means (224) for designating an area to be subject to landing correction; test signal generating means (225) for displaying a test signal on the display screen of said display means according to an output of said correction area designation means;

mislanding error detection means (226) for detecting a mislanding error in the correction area designated by said correction area designation means;

correction magnetic field data generating means (228) for generating correction magnetic field data corresponding to the correction area designated by said correction area designation means according to a mislanding error data output from said mislanding error detection means;

memory means (229) for storing the correction magnetic field data generated by said correction magnetic field data generating means; and

drive means (231) for driving said landing correction means according to the correction magnetic field data output from said memory means.

10. The beam landing correction apparatus as claimed in Claim 9, wherein said correction magnetic field data generating means generates magnetic field direction data and magnetic field intensity data of the correction magnetic field corresponding to the quantity of the mislanding error in the area to be subject to the landing correction.

Fig.1 (a)

DISPLAY SEC. 12

CONTROL SEC. 11

DRIVE SEC. 10

9

CRT

5,(6)

1,(3)

2,(4)

7,(8)

Fig.1 (b)

5

6

3

4

1

2

y

x

z

7

8

DISPLAY SCREEN

# Fig.2(a)

Influence of Geomagnetism

# Fig.2(b)

Influence of Vertical Magnetism

Northern Hemisphere          Southern Hemisphere

$$F i g. 2(c)$$

Fig.3(a)

25
DISPLAY SEC.

21

CRT

17,(18)

13,(15)

23
MFDS

14,(16)

26
SETTING SEC.

24
CONTROL SEC.

22
DRIVE SEC.

19,(20)

Fig.3(b)

17

18

15

13

y

x

z

16

14

19

DISPLAY SCREEN

20

## F i g. 4(a)

31,(32)
27,(29)
35  CRT
37
39
28,(30)
DISPLAY
SEC.
MEDS
PE
38
36
CONTROL
SEC.
DRIVE
SEC.
33,(34)

## F i g. 4(b)

32
31
27
29
y
x
z
30
28
33  DISPLAY
SCREEN  34

F i g. 5

Fig.6

DISPLAY SCREEN

*F i g. 7*

Fig.8(a)

EP 0 555 094 A2

F i g.8(b)

233

y

x

z

DISPLAY SCREEN

Fig. 9 (a)

303

301

Fig. 9 (b)

304

302

Fig.10
(Prior Art)

# F i g . 11
## ( Prior Art )

C6

C5

C1

101

102

C4

C2

C3

# Fig. 12(a)
## (Prior Art)

P$_{S6}$

P$_{S5}$

P$_{S1}$

137

P$_{S4}$

101a

P$_{S3}$

P$_{S2}$

# Fig. 12(b)
## (Prior Art)

137

P$_{S1}$

101a

139

## *F i g.13(a)*
## *(Prior Art )*

Field

## *F i g.13(b)*
## *(Prior Art )*

## F i g . 14
## ( Prior Art )

Optimum Landing Beam

Mislanding Beam

139        101a

Light quantity output